# EUROPÄISCHE PATENTANMELDUNG

(11) **EP 2 579 075 A1**
(43) Veröffentlichungstag der Anmeldung: **10.04.2013**
(21) Anmeldenummer: 11184195.3
(22) Anmeldetag: 06.10.2011
(51) Int. Cl.: G02B 6/04, G02B 6/42, G02B 6/02, A61C 19/00

(54) **Stabförmiger Lichtleiter**

(71) Anmelder: Ivoclar Vivadent AG, 9494 Schaan (LI)
(72) Erfinder: Murr, Wolfram, 7000 Chur (CH)
(74) Vertreter: Splanemann

(57) **Zusammenfassung**

Bei der Erfindung handelt es sich um einen stabförmigen Lichtleiter mit einem lichteintrittsseitigen, Ende (18) und einem lichtaustrittseitigen, Ende (20), welcher Lichtleiter (10) wenigstens eine Lichtleitfaser (30) in einem multicoren Abschnitt (14) aufweist und der Lichtleiter (10) aus einem monocoren Abschnitt (12) und einem multicoren Abschnitt (14) besteht, wobei insbesondere der monocore Abschnitt (12) dem lichteintrittseitigen Ende (18) und der multicore Abschnitt dem lichtaustrittseitigen Ende (20) benachbart ist.

## Beschreibung

Die Erfindung betrifft einen Lichtleiter, gemäß dem Oberbegriff von Anspruch 1, der insbesondere für die Verwendung im Dentalbereich geeignet ist, sowie ein Lichthärtgerät gemäß dem Oberbegriff von Anspruch 15.

Derartige Lichthärtgeräte sind seit langem bekannt.

Ein Beispiel für eine Realisierung eines Lichtleiters aus den 70er Jahren lässt sich der DE 23 52 670 entnehmen. Bereits seinerzeit wurden biegsame Lichtleiter, die aus einer einzigen Faser bestehen, als bekannt angesehen. Die Druckschrift weist auch die Realisierung von lichtleitenden Flüssigkeiten und einen biegsamen Plastikschlauch für die Bereitstellung eines Lichtleiters als bekannt nach.

Lichtleiter, die aus einer einzigen Faser bestehen und auch als Lichtleitstab bezeichnet werden können, sind im Grunde vergleichsweise steif und lassen sich insofern schlecht biegen. Flüssigkeitsgefüllte Lichtleiter sind andererseits gerade bei Anwendungen im Oralbereich ungünstig, denn es besteht die Gefahr, dass der Patient - versehentlich - auf den Lichtleiter beißt und so ein Leck erzeugt.

In den 80er Jahren, aber auch bis heute, ist man daher typischerweise zu Mehrfaser-Lichtleitern übergegangen; als Beispiel hierfür sei die DE 297 09 785 genannt.

Mehrfaser-Lichtleiter, die auch als multicore Lichtleiter bezeichnet werden haben den Vorteil der wesentlich verbesserten Biegbarkeit. Der Zahnarzt kann so dem Lichtleiter endseitig die gewünschte Form geben, um den Lichtaustritt an der gewünschten, teilweise tiefliegenden Stelle, zu erhalten.

Gleiches gilt übrigens für die Verwendung von Lichtleitern für Lichtsensoren für Dentalkameras, aber auch beispielsweise für die Verwendung von Lichtleitern in Endoskopen, die ebenfalls enge Krümmungsradien benötigen.

Es ist bereits seit langer Zeit bekannt, dass man durch optisch additive Mischungen von Grundfarben wie Rot, Gelb und Blau weisses Licht erzeugen kann. Dies wird ausgenutzt, indem LEDs entsprechender Farbgebung eng benachbart nebeneinander angeordnet werden, und deren Lichtemission dem Lichtleiter zugeleitet wird.

Zwar sind in neuerer Zeit auch sogenannte weisse LED bekannt geworden. Diese sind jedoch derzeit noch vergleichsweise teuer, und durch die Lichtmischung lässt sich auch der genaue Farbton besser an die Bedürfnisse anpassen. Es ist auch möglich, ein bestimmtes Emissionsspektrum auszuwählen.

Wenn eine einzige LED oder ein LED-Chip als Lichtquelle verwendet wird, erfolgt die Lichtemission primär an der Oberseite des LED-Chips, die typischerweise etwa 1 mm² groß ist. Wenn nun ein multicorer Lichtleiter, der typischerweise einen Durchmesser von 6 bis 13 mm aufweist, vor dem LED-Chip montiert wird, trifft die Haupt-Lichtemission typischerweise lediglich die 6 oder 7 inneren Fasern, während die äußeren Lichtleitfasern nur zu einem ganz geringen Teil ausgenutzt werden.

Um dies zu verhindern, ist es bekannt geworden, eine Sammellinse am Lichteingangsseitigen Ende der Lichtleitfasern einzusetzen. Andererseits bedeutet das zusätzliche Vorsehen einer Sammellinse zwei weitere optische Grenzflächen mit den entsprechenden Reflexionen, so dass der Wirkungsgrad sinkt.

In beiden genannten Anwendungsfällen greift man daher gerne auf monocore Lichtleiter oder Lichtleitstäbe zurück, insbesondere da die gesamte Querschnittfläche des Lichtleiters bei monocorer Technik vom optisch wirksamen Medium eingenommen werden kann, im Gegensatz zu den Ausbeuteverlusten, die durch die Verwendung von multicoren Lichtleitern entstehen.

Demgegenüber liegt der Erfindung die Aufgabe zu Grunde, ein Lichthärtgerät gemäß dem Oberberiff von Anspruch 1 zu schaffen, das zum einen universell verwendbar und zum anderen gerade bei medizinischen, bevorzugt zahnmedizinischen Anwendungen ergonomischer handhabbar ist, ohne dass die Lichtemission leiden würde.

Dieser Aufgabe wird erfindungsgemäß durch Anspruch 1 gelöst. Vorteilhafte Weiterbildungen ergeben sich aus den Unteransprüchen.

Erfindungsgemäß besonders günstig ist es, dass sich überraschenderweise durch die Kombination von monocoren und multicoren Lichtleitern die Vorteile beider erzielen lassen, ohne dass dies mit den zu erwartenden Nachteilen erkauft würde. Die bei multicoren Lichtleitern bestehende schlechte Lichtdurchmischung wird vollständig vermieden, ebenso wie die nur partielle Lichtbeaufschlagung, die auf die zentralen Lichtleitfasern fokussiert ist. Es ist nicht erforderlich, eine Sammellinse eingangsseitig zu verwenden; vielmehr kann die von dem oder den LED-Chips emittierte Lichtstrahlung unmittelbar dem monocoren Lichtleiter zugeleitet werden. Dieser nimmt sie aufgrund der vergleichsweise großen Lichteintrittsfläche vollständig auf und leitet sie nach vorne.

In einer modifizierten Ausgestaltung der Erfindung sind mehr als ein multicorer und/oder mehr als ein monocorer Abschnitt miteinander verbunden. Dies ist beispielsweise dann günstig, wenn der Lichtleiter sehr lang ist und über seinen Verlauf Stellen aufweist, an denen er stark abgebogen werden muss. Dort sind dann multicore und im übrigen monocore Abschnitte ausgebildet.

Während typischerweise Lichtleitfasern eine 15% geringere Lichtausbeute bieten als monocore Lichtleiter, ist es erfindungsgemäß vorgesehen, diese Ausbeuteverluste mindestens zu halbieren. Wenn lediglich das vordere, also lichtaustrittsseitige Drittel des Lichtleiters multicor und die rückwärtigen zwei Drittel des Lichtleiters monocor ausgebildet ist, sind die Ausbeuteverluste von 15 auf 5% reduziert.

Besonders günstig ist es auch, dass erfindungsgemäß verhindert wird, dass ein Bild des LED-Chips durch Lichtleitfasern oder multicore Lichtleiter abgebildet wird. In dem monocoren Lichtleitabschnitt wird eine starke Durchmischung erzeugt, die so für die Lichtvergleichmäßigung sorgt.

Dennoch lassen sich bei Realisierung mehrerer verschiedenfarbiger LED-Chips die erwünschten Emissionsspektren bereitstellen, und zwar ohne dass eine zusätzliche Sammellinse eingesetzt werden müsste. Dies gilt insbesondere auch für die typischerweise drei im Dreieck angeordneten verschiedenfarbigen Lichtleitchips.

In erfindungsgemäß besonders günstiger Weise kann der Übergang zwischen dem monocore und dem multicoren Abschnitt des Lichtleiters unter Beibehaltung des Brechungsindex erfolgen. Hierzu kann ein Glasklebstoff oder ein Zementklebstoff eingesetzt werden, dessen Brechungsindex dem des verwendeten optischen Materials für den Lichtleiter entspricht.

Gemäß einer weiteren vorteilhaften Ausgestaltung ist es vorgesehen, den Lichtleiter über eine Hülse auszusteifen, die sich besonders bevorzugt über den Übergang zwischen den monocoren und dem multicoren Abschnitt erstreckt. Die Hülse hat den zusätzlichen Vorteil, das ein Steifigkeitssprung verhindert wird, der die Belastbarkeit des Lichtleiters gegen Scherbeanspruchung durch seitliche Anlage an dem Applikationsort reduziert. Die eingeleiteten Kräfte werden von dem multicoren Abschnitt mindestens teilweise auf den steiferen monocoren Abschnitt übergeleitet. Dennoch ist die Biegbarkeit und Flexibiltät des vorderen Endes des Lichtleiters in großem Umfang gegeben, also an der Stelle, an welcher die Biegbarkeit in der praktischen Anwendung essentiell ist.

bevorzugt besteht die Hülse aus Metall, insbesondere aus rostfreien Stahl und weist eine Wandstärke auf, die weniger als ein Fünftel, insbesondere weniger als ein Fünfzehntel des Durchmessers des Lichtleiters beträgt.

Besonders bevorzugt erfolgt ferner ein Übergang von dem monocoren Abschnitt (12) auf den multicoren Abschnitt unmittelbar, also ohne Luftschicht, und der Brechungsindex ändert sich über den Verlauf des Übergangs um weniger als 50 %, insbesondere um weniger als 20 %.

Verglichen mit dem aus der DE-OS 23 52 670 bekannten biegsamen monocoren Lichtleiter weist der multicore Abschnitt zudem den Vorteil auf, dass die Ausbeuteverluste im Verhältnis zum geraden Verlauf des Lichtleiters sinken. Ein stark gebogener multicorer Lichtleiter hat typischerweise eine geringere Dämpfung als ein in gleichem Radius gebogener Lichtleiter, so dass erfindungsgemäß für den geraden Bereich des Lichtleiters der Lichtleitertyp mit den dort geringsten Verlusten mit dem Lichtleiter kombiniert wird, der für den gebogenen Bereich die geringsten Verluste aufweist.

Besonders günstig ist es, wenn der multicore Abschnitt eine Biegung aufweist oder abgekröpft ist, insbesondere dem lichtaustrittseitigen Ende benachbart.

In weiterer besonders günstiger Ausgestaltung der Erfindung ist es vorgesehen, dem monocoren Abschnitt eine Länge zu geben, die mindestens seinem 5-fachen Durchmesser entspricht. Es versteht sich, dass die Länge aber auch in beiden Bereichen variierbar ist, beispielsweise vom doppelten, dreifachen, bis zum sieben- oder gar zehnfachen des Durchmessers.

Günstigerweise sind der monocore und/oder der multicore Abschnitt zumindest über einen Teil ihrer Länge konisch ausgebildet, inbesondere sich zum lichtaustrittseitigen Ende hin verjüngend.

In erfindungsgemäß günstiger Weise bestehen sowohl der monocore als auch die Einzelfasern des multicoren Abschnitts aus einem Kernglas und einem Mantelglas. In an sich bekannter Weise unterscheiden sich diese stark in ihrem Brechungsindex, was zur erwünschten Vollreflexion führt.

In weiterer günstiger Ausgestaltung ist an der äußeren Oberfläche des monocoren, oder des multicoren Abschnitts, aber gegebenenfalls auch an beiden Abschnitten eine Beschichtung vorgesehen, die den Lichtaustritt verhindert und insofern intransparent ist. Die Beschichtung kann auch metallisch reflektierend ausgestaltet sein.

In vorteilhafter Ausgestaltung der Erfindung ist es vorgesehen, dass das vorderere Ende des Lichtleiters, das Teil des multicoren Abschnitts ist, mit einem vorgegebenen Winkel abgebogen ist, beispielsweise 45 Grad zur optischen Achse der Lichtquelle, die den Lichtleiter beaufschlagt.

In modifizierter Ausgestaltung der Erfindung ist es vorgesehen, das vordere Ende biegsam auszugestalten, so dass es je nach Anwendungsfall abgebogen werden kann, beispielsweise um 90 Grad oder sogar mehr als 90 Grad.

Besonders günstig ist es jedenfalls, dass im monocoren Abschnitt die von den LED-Chips emittierten verschiedenen Farben gut durchmischt werden, so dass gut durchmischtes Licht in den multicoren Abschnitt eintritt und keine Farbvarianz über die Lichtaustrittsfläche feststellbar ist.

Wenn der erfindungsgemäße brechnungsidentische Klebstoff zwischen dem monocoren und multicoren Abschnitt temperaturfest ist, ist der erfindungsgemäße Lichtleiter nicht nur abnehmbar, sondern auch autoklavierbar. Dies spielt insbesondere bei der Verwendung im Rahmen von Dentallichtleitern und Endoskopen eine Rolle.

Die Lagerung des Lichtleiters gegenüber der Lichtquelle kann in einer beliebigen geeigneten Weise erfolgen, beispielsweise über eine Buchse, die auch eine Drehbarkeit des Lichtleiters gegenüber der Lichtquelle ermöglicht.

Erfindungsgemäß läßt sich der Lichtleiter günstig in einem Lichthärtgerät einsetzen, wobei der Lichtleiter gegenüber dem Lichthärtgerät bevorzugt verdrehbar ist, und insbesondere an diesem abnehmbar gelagert ist.

Der Raum zwischen dem Lichteintrittsende des monocoren Abschnitts und der Lichtquelle kann in beliebiger geeigneter Weise gefüllt sein, beispielsweise auch mit Silikon oder einer anderen transparenten Masse , dessen bzw. deren Brechungsindex im Wesentlichen dem Brechungsindex des verwendeten Glases entspricht, so dass nur sehr geringe Reflexionsverluste bei Medienübergang entstehen. Es ist auch möglich, den Raum mit der transparenten Masse zu vergießen.

Auch wenn hier die Verwendung von Glas sowohl für den monocoren Abschnitt als auch dem multicoren Abschnitt des Lichtleiters herausgestellt ist, versteht es sich, dass beliebige andere geeignete Materialien, insbesondere transparenter Kunststoff, für die Bereitstellung des Lichtleiters verwendbar sind.

Gemäß einer vorteilhaften Ausgestaltung ist es vorgesehen, dass der monocore Abschnitt eine Länge aufweist, die mindestens dem 1,5-fachen Durchmesser des monocoren Abschnittes entspricht.

Gemäß einer weiteren vorteilhaften Ausgestaltung ist es vorgesehen, dass der monocore Abschnitt und/oder die Lichtleitfasern des multicoren Abschnitts aus einem Kernglas und einem Mantelglas bestehen.

Gemäß einer weiteren vorteilhaften Ausgestaltung ist es vorgesehen, dass sich an der äusseren Oberfläche des monocoren und/oder des multicoren Abschnittes eines Beschichtung befindet, die den Austritt von Licht aus dem Lichtleiter verhindert und/oder dort auftreffendes Licht reflektiert.

Gemäß einer weiteren vorteilhaften Ausgestaltung ist es vorgesehen, dass die beiden Abschnitte mit einem Zementklebstoff und/oder einem Glasklebstoff an einem Übergang miteinander verbunden sind, der und/oder die einen Brechungsindex wie Glas aufweist. Gemäß einer weiteren vorteilhaften Ausgestaltung ist es vorgesehen, dass zumindest der monocore Abschnitt von einer Hülse umgeben ist.

Gemäß einer weiteren vorteilhaften Ausgestaltung ist es vorgesehen, dass sich die Hülse mindestens über den Übergang zwischen dem monocoren Abschnitt und dem multicoren Abschnitt erstreckt, so dass zumindest ein sich an den monocoren Abschnitt anschließender Teilbereich des multicoren Abschnitts ebenfalls von der Hülse umgeben ist.

Gemäß einer weiteren vorteilhaften Ausgestaltung ist es vorgesehen, dass der Durchmesser des Lichtleiters 6 mm bis 13 mm beträgt.

Gemäß einer weiteren vorteilhaften Ausgestaltung ist es vorgesehen, dass der monocore und/oder der multicore Abschnitt zumindest über einen Teil ihrer Länge konisch ausgebildet sind.

Gemäß einer weiteren vorteilhaften Ausgestaltung ist es vorgesehen, dass sich das lichteintrittseitige Ende an dem monocoren Abschnitt und das lichtaustrittseitige Ende an dem multicoren Abschnitt befindet.

Gemäß einer weiteren vorteilhaften Ausgestaltung ist es vorgesehen, dass der multicore Abschnitt eine Biegung aufweist oder abgekröpft ist,

Gemäß einer weiteren vorteilhaften Ausgestaltung ist es vorgesehen, dass sich eine Lichtaustrittsfläche des multicoren Abschnittes in einem Winkel von 2° bis 90° gegenüber einer senkrecht zur Längserstreckung des monocoren Abschnittes verlaufenden Lichteintrittsfläche erstreckt.

Gemäß einer weiteren vorteilhaften Ausgestaltung ist es vorgesehen, dass das lichteintrittseitige Ende des monocoren Abschnittes eine Verbindungsschnittstelle zu einem Lichthärtgerät aufweist, mit dem polymerisierbares Dentalmaterial ausgehärtbar ist.

Gemäß einer weiteren vorteilhaften Ausgestaltung ist es vorgesehen, dass die Verbindungsschnittstelle von einer formschlüssig mit dem Lichthärtgerät verbindbaren Buchse gebildet ist, die fest mit dem lichteintrittseitigen Ende des monocoren Abschnitts verbunden ist.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine schematische Schnittansicht durch eine Ausführungsform eines erfindungsgemäßen Lichtleiters; und
- Fig. 2: eine schematische Schnittansicht durch eine weitere Ausführungsform eines erfindungsgemäßen Lichtleiters.

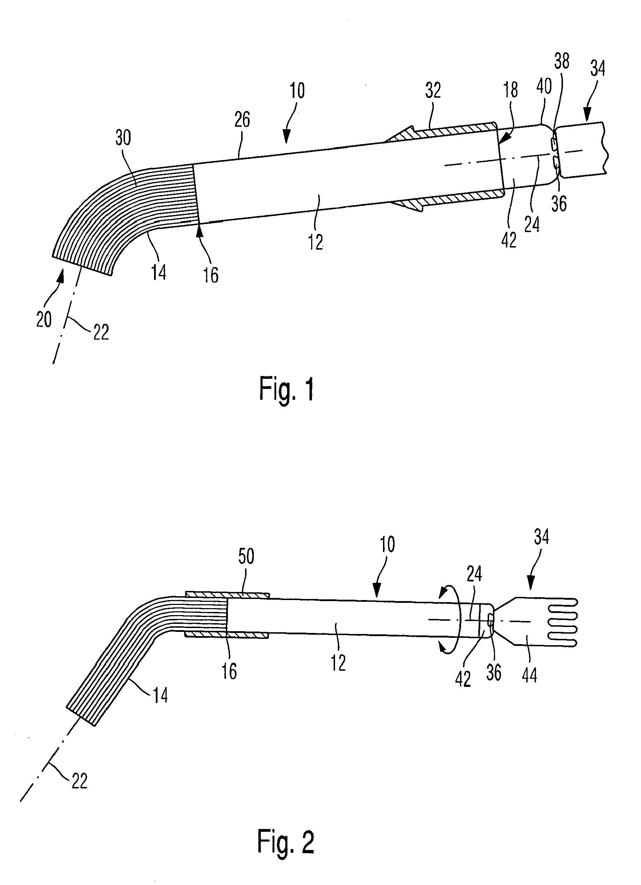

Der in Fig. 1 dargestellte Lichtleiter 10 weist einen monocoren Abschnitt 12 und einen multicoren Abschnitt 14 auf. Beide Abschnitte 12 und 14 weisen den gleichen Außendurchmesser auf und gehen in einem Übergang 16 bündig ineinander über. Der monocore Abschnitt 12 ist einem lichteintrittsseitigen Ende 18 des Lichtleiters 10 benachbart angeordnet und der multicore Abschnitt 14 einem lichtaustrittsseitigen Ende 20 des Lichtleiters.

Der monocore Abschnitt erstreckt sich gerade und nimmt in dem dargestellten Ausführungsbeispiel etwa eine Länge von dreiviertel der Länge des Lichtleiters ein. Der multicore Abschnitt 14 nimmt das letzte, das vordere Viertel des Lichtleiters ein und ist dem Ende 20 benachbart abgebogen, und zwar etwa um einen Winkel von 60 Grad.

Eine Lichtaustrittsachse 22 erstreckt sich dementsprechend in einem Winkel von etwa 60 Grad zu einer Lichteintrittsachse 24.

Sowohl der monocore Abschnitt 12 als auch der multicore Abschnitt 14 weisen außen einen nicht im Einzelnen dargestellten Mantel 26 auf, der wie ein Überzug ausgebildet ist und dort von Innen auftreffende Lichtstrahlung nach innen zurückreflektiert.

Der monocore Abschnitt ist als massiver, stabförmiger Lichtleitstab ausgebildet, der von dem Mantel 26 umgeben ist. Demgegenüber besteht der multicore Abschnitt 14 aus einer Vielzahl, beispielsweise 100 bis 500 einzelnen Lichtleitfasern 30, wie es in Fig. 1 schematisch angedeutet ist. In dem dargestellten Ausführungsbeispiel ist auch der multicore Abschnitt 14 steif ausgebildet.

An dem Übergang 16 sind die beiden Abschnitte 12 und 14 mit einem Glasklebstoff miteinander verbunden. Der Lichtleitstab des monocoren Abschnitts, die Lichtleitfasern 30 des multicoren Abschnitts 14 und der nicht dargestellte Glasklebstoff weisen je gleiche Brechungsindizes auf, so dass Reflexionen an den Phasengrenzen nach Möglichkeit vermieden werden.

Der monocoare Abschnitt 12 weist an seinem lichteintrittsseiten Ende 18 eine Steckhülse 32 auf. Über die Steckhülse 32 ist der Lichtleiter 10 an einer entsprechenden Steckbuchse eines Lichthärtgeräts einsteckbar gelagert, wobei die Steckbuchse in an sich bekannter Weise ausgebildet ist und hier nicht dargestellt ist.

Der Lichteintritt in das licheintrittsseitige Ende 18 erfolgt über eine Lichtquelle 34, die eine Mehrzahl von einzelnen LED-Chips umfasst, von denen die Chips 36 und 38 in Fig. 1 dargestellt sind. Der Lichtaustritt der Lichtquelle 34 ist über einen Reflektor 40 in an sich bekannter Weise gebündelt. Der Raum 42 zwischen der Lichtquelle 34 und dem Ende 18 ist mit Silikon oder einer anderen Masse gefüllt, deren Brechungsindex dem von Glas nahe kommt.

Die Chips 36 und 38 sind auf einem Kühlkörper 44 montiert, der die dort erzeugte Wärme abführt.

Die Chips 36 und 38 weisen unterschiedliche Emissionsmaxima auf und sind bevorzugt getrennt steuerbar.

Wenn alle LED-Chips der Lichtquelle 34 eingeschaltet sind, ist der Raum 42 von Licht unterschiedlicher Farbe erfüllt. In dem monocoren Abschnitt 12 erfolgt jedenfalls eine gute Lichtmischung, so dass in die Lichtleitfasern 30 weisses Licht eingeleitet wird.

Eine weitere Ausführungsform des erfindungsgemäßen Lichtleiters ist in Fig. 2 dargestellt. Im Unterschied zu der Ausführungsform gemäß Fig. 1 ist hier der multicore Abschnitt 14 biegsam ausgestaltet. In dem dargestellten Ausführungsbeispiel erstreckt sich die optische Lichtaustrittsachse 22 in einem Winkel von etwa 45 Grad zur Lichteintrittsachse 24; es versteht sich, dass jedoch auch eine beliebige andere Position, und auch sogar eine Umlenkung um nahezu 180 Grad möglich ist.

Der Übergang 16 ist in diesem Ausführungsbeispiel von einer Hülse 50 umgeben, die der Aussteifung des Übergangs dient und verhindert, dass bei starker mechanischer Beanspruchung der an dem Übergang vorgesehene Zementklebstoff versagt.

Wie aus Fig. 2 ersichtlich ist, lässt sich der Lichtleitstab mittels der Lichtleiter 10 insgesamt drehen; dies ist auch bei der Ausführungsform gemäß Fig. 1 möglich. In der Ausführungsform gemäß Fig. 2 ist lediglich ein einziger Chip 36 als Lichtquelle 34 vorgesehen, der auf dem Kühlkörper 44 zentral montiert ist. Der Raum 42 ist recht klein, was bereits deswegen günstig ist, da Silikon typischerweise höhere Lichtverluste erzeugt als Glas. Insofern ist übrigens auch der Raum 42 gemäß Fig. 1 übertrieben lang dargestellt; in der Praxis beträgt die Länge des Raums 42 beispielsweise ein Drittel oder weniger des Durchmessers des Lichtleiters 10.

Der Durchmesser des Lichtleiters beträgt gemäß Fig. 1 12 mm, und gemäß Fig. 2 5 mm, wobei es sich versteht, dass der Durchmesser des Lichtleiters beliebige Werte annehmen kann, ohne den Bereich der Erfindung zu verlassen. Dies gilt auch für die Längenverteilung zwischen dem monocoren und dem multicoren Abschnitt.

Beispielsweise kann allein der monocore Abschnitt mindestens acht mal so lang wie sein Durchmesser sein. In der Ausführungsform gemäß Fig. 2 beträgt die Länge des multicoren Abschnitts 14 etwa zwei Fünftel der Gesamtlänge des Lichtleiters 10, und die des monocoren Abschnitts dementsprechend drei Fünftel.

Auch wenn hier die Erfindung anhand des Einsatzes in einem Dentallichthärtgerät beschrieben ist, versteht es sich, dass die grundsätzlichen Gedanken der Erfindung auch bei anderen Geräten, die Lichtleiter erfordern, möglich ist, insbesondere bei medizinischen Geräte wie beispielsweise einem Endoskop.

## Patentansprüche

1. Stabförmiger Lichtleiter mit einem lichteintrittsseitigen, Ende (18) und einem lichtaustrittseitigen, Ende (20), welcher Lichtleiter (10) wenigstens eine Lichtleitfaser (30) in einem multicoren Abschnitt (14) aufweist, **dadurch gekennzeichnet, dass** der Lichtleiter (10) aus wenigstens einem monocoren Abschnitt (12) und wenigstens einem multicoren Abschnitt (14) besteht.

2. Lichtleiter nach Anspruch 1, **dadurch gekennzeichnet, dass** der monocore Abschnitt (12) eine Länge aufweist, die mindestens dem 1,5-fachen Durchmesser des monocoren Abschnittes (12) entspricht.

3. Lichtleiter nach einem der vorhergehenden Ansprüche, **dadurch gekennzeichnet, dass** der monocore Abschnitt (12) und/oder die Lichtleitfasern (30) des multicoren Abschnitts (14) aus einem Kernglas und einem Mantelglas bestehen.

4. Lichtleiter nach einem der vorhergehenden Ansprüche, **dadurch gekennzeichnet, dass** sich an der äusseren Oberfläche des monocoren und/oder des multicoren Abschnittes (12,14) eines Beschichtung befindet, die den Austritt von Licht aus dem Lichtleiter verhindert und/oder dort auftreffendes Licht reflektiert.

5. Lichtleiter nach einem der vorhergehenden Ansprüche, **dadurch gekennzeichnet, dass** die beiden Abschnitte (12, 14) mit einem Zementklebstoff und/oder einem Glasklebstoff an einem Übergang (16) miteinander verbunden sind, der und/oder die einen Brechungsindex wie Glas aufweist.

6. Lichtleiter nach einem der vorhergehenden Ansprüche, **dadurch gekennzeichnet, dass** zumindest der monocore Abschnitt (12) von einer Hülse (50) umgeben ist.

7. Lichtleiter nach einem der vorhergehenden Ansprüche, **dadurch gekennzeichnet, dass** sich die Hülse (50) mindestens über den Übergang (16) zwischen dem monocoren Abschnitt (12) und dem multicoren Abschnitt (14) erstreckt, so dass zumindest ein sich an den monocoren Abschnitt (12) anschließender Teilbereich des multicoren Abschnitts (14) ebenfalls von der Hülse (50) umgeben ist.

8. Lichtleiter nach einem der vorhergehenden Ansprüche, **dadurch gekennzeichnet, dass** der Durchmesser des Lichtleiters (10) 6 mm bis 13 mm beträgt.

9. Lichtleiter nach einem der vorhergehenden Ansprüche, **dadurch gekennzeichnet, dass** der monocore und/oder der multicore Abschnitt (12, 14) zumindest über einen Teil ihrer Länge konisch ausgebildet sind.

10. Lichtleiter nach einem der vorhergehenden Ansprüche, **dadurch gekennzeichnet, dass** sich das lichteintrittseitige Ende (18) an dem monocoren Abschnitt (12) und das lichtaustrittseitige Ende (20) an dem multicoren Abschnitt (14) befindet.

11. Lichtleiter nach einem der vorhergehenden Ansprüche, **dadurch gekennzeichnet, dass** der multicore Abschnitt (14) eine Biegung aufweist oder abgekröpft ist,

12. Lichtleiter nach einem der vorhergehenden Ansprüche, **dadurch gekennzeichnet, dass** sich eine Lichtaustrittsfläche des multicoren Abschnittes (14) in einem Winkel von 2° bis 90° gegenüber einer senkrecht zur Längserstreckung des monocoren Abschnittes (12) verlaufenden Lichteintrittsfläche erstreckt.

13. Lichtleiter nach einem der vorhergehenden Ansprüche, **dadurch gekennzeichnet, dass** das lichteintrittseitige Ende (18) des monocoren Abschnittes (12) eine Verbindungsschnittstelle zu einem Lichthärtgerät aufweist, mit dem polymerisierbares Dentalmaterial ausgehärtbar ist.

14. Lichtleiter nach einem der vorhergehenden Ansprüche, **dadurch gekennzeichnet, dass** die Verbindungsschnittstelle von einer formschlüssig mit dem Lichthärtgerät verbindbaren Buchse (32) gebildet ist, die fest mit dem lichteintrittseitigen Ende (18) des monocoren Abschnitts (12) verbunden ist.

15. Lichthärtgerät zum Polymerisieren von Dentalmaterialien, mit einem Lichtleiter (10) gemäß einem der vorhergehenden Ansprüche.
